# EUROPEAN PATENT APPLICATION

(11) **EP 2 887 629 A1**
(43) Date of publication of application: **24.06.2015**
(21) Application number: 14003989.2
(22) Date of filing: 26.11.2014
(51) Int. Cl.: H04N 1/00

(54) **Image processing apparatus, information processing apparatus, and control method thereof, and storage medium**

(30) Priority: 18.12.2013 JP 2013261667; 29.09.2014 JP 2014199053
(71) Applicant: Canon Kabushiki Kaisha, Tokyo (JP)
(72) Inventor: Sato, Hideo, Tokyo (JP)
(74) Representative: WESER & Kollegen

(57) **Abstract**

An image processing apparatus having a calibration function to correct density characteristics at the time of printing includes an input unit configured to input user's instructions to perform a calibration, a signal generation unit configured to generate a signal indicating that a calibration is being performed, a control unit configured to control the image processing unit, and a display control unit configured to control a display unit, and in the case where the signal indicating that a calibration is being performed is generated, the control unit performs control so that instructions to perform a calibration cannot be input through the input unit, and the display control unit displays a message to the effect that instructions to perform a calibration cannot be given on the display unit.

## Description

### BACKGROUND OF THE INVENTION

### Field of the Invention

The present invention relates to control of a job received during a calibration operation.

### Description of the Related Art

In recent years, a color image forming apparatus, such as a color printer and a color copying machine, has been increasingly requested to improve image quality of an output image. It is known that the quality of an image is greatly affected by the gradation of density and the stability of color. In particular, in the color image forming apparatus adopting the electrophotographic system, even slight variations in environment will cause variations in density, and therefore, it is necessary to make is possible to keep constant at all times the gradation properties of the density.

Consequently, a conventional color image forming apparatus mounts the so-called calibration function that is performed by a procedure including 1) to 3) below.
1)A chart including patches of data whose gradation is different corresponding to each of toner colors (e.g., CMYK of cyan, magenta, yellow, black) is prepared and output by an image forming apparatus.
2)Values of the output chart are read by using a scanner mounted in the image forming apparatus, or a densitometer independent of the image forming apparatus, or the like.
3)The values read from the chart are compared with target data possessed in advance and thereby an LUT (Look Up Table) for correcting the gradation independently for each of CMYK is created. The LUT is a table indicating output data corresponding to input data divided at specific intervals and it is possible for the LUT to express nonlinear characteristics that cannot be expressed by an arithmetic operation expression. By this LUT, each input signal value of C, M, Y, and K is converted into each output signal value on the image forming apparatus side.

In the process to perform the above-described calibration, a user's task is interposed, such as setting the output chart to a scanner and measurement by a densitometer. In other words, in the process to perform a calibration, there is a possibility that the user's task will be delayed by various causes, and therefore, there is a possibility that various requests (jobs) will be input to the image forming apparatus during the period from the start of a calibration until the calibration is completed and so-called operation contention will occur. Then, these jobs are independent of one another and, for example, there is a possibility that during the execution of a calibration, another calibration job occurs, and therefore, operation contention between the calibrations will occur. As one of the methods for eliminating such operation contention, a technique for performing control so that during the execution of a calibration, even if another calibration job of the same kind occurs, the other calibration job is not performed (Japanese Patent Laid-Open No. 2006-212918).

However, with the technique according to the above-described Japanese Patent Laid-Open No. 2006-212918, in the case where the execution of a calibration based on instructions of a user is restricted because of operation contention, the fact is not notified to the user who has input the calibration job. This may cause the user to misunderstand that trouble, such as a failure, has occurred in the image forming apparatus, leading to a reduction in usability.

### SUMMARY OF THE INVENTION

The present invention in its first aspect provides an image processing apparatus as specified in claims 1 to 9. The present invention in its second aspect provides an information processing apparatus as specified in claims 10 to 13.

The present invention in its third aspect provides a control method as specified in claims 14 and 15.

The present invention in its fourth aspect provides a computer-readable recording medium as specified in claim 16.

According to the present invention, in the case where the execution of a calibration based on instructions of a user is restricted, it is possible to enable the user to grasp the fact while dealing with operation contention among calibration jobs.

Further features of the present invention will become apparent from the following description of exemplary embodiments (with reference to the attached drawings).

### BRIEF DESCRIPTION OF THE DRAWINGS

FIG. 1 is a diagram showing an internal configuration of an image forming apparatus;
FIG. 2 is a diagram for explaining processing inside an image processing unit;
FIG. 3 is a schematic diagram showing a relationship of input/output of a 1D-LUT correction unit;
FIG. 4 is a flowchart showing a flow of processing to control operation contention among calibration jobs etc. in an image forming apparatus according to a first embodiment;
FIG. 5 is a diagram showing an example of a menu screen on which request inputs related to a calibration are disabled;
FIG. 6 is a flowchart showing a flow of processing to control operation contention among calibration jobs etc. in an image forming apparatus according to a second embodiment;
FIG. 7 is a flowchart showing a flow of processing to control operation contention among calibration jobs etc. in an image forming apparatus according to a third embodiment;
FIG. 8 is a diagram showing an example of a configuration of a network print system;
FIG. 9 is a diagram showing the relationship between FIGs. 9A and 9B;
FIGs. 9A and 9B are flowcharts showing a flow of processing to control operation contention among calibration jobs etc. in an image forming apparatus according to a fourth embodiment;
FIG. 10 is a flowchart showing a flow of processing of a calibration application;
FIG. 11 is a diagram showing the relationship between FIGs. 11A and 11B;
FIGs. 11A and 11B are flowcharts showing a flow of processing to control operation contention among calibration jobs etc. in an image forming apparatus according to a fifth embodiment; and
FIG. 12 is a flowchart showing a flow of processing of a calibration application.

### DESCRIPTION OF THE EMBODIMENTS

Hereinafter, embodiments for embodying the present invention are explained by using the drawings.

In the present specification, explanation is given based on the premise that the image forming apparatus adopts the electrophotographic system, but it is needless to say that it is also possible to apply the present invention to other printing systems, such as an inkjet printing system.

Before explaining each embodiment of the present invention, the kinds of calibration to correct density characteristics at the time of printing are described. Calibrations that appear in the present specification include the following three kinds.
1)A calibration based on user's instructions via an input unit provided in the image forming apparatus (hereinafter, called a "normal calibration").
2)A calibration based on user's instructions via an application that runs on an information processing apparatus, such as a PC (Personal Computer) connected via a network (hereinafter, called a "remote calibration").
3) A calibration that is performed automatically in the image forming apparatus in response to the fulfillment of predetermined conditions determined in advance, such as a change in the peripheral environment of the image forming apparatus, the number of printed sheets, and circumstances of consumption of coloring materials for development (hereinafter, called an "automatic calibration").

While the calibration requests in 1) and 2) described above are based on the operation or instructions of a user, the calibration request in 3) described above is made automatically in response to a change in the peripheral environment, an accumulated amount of printing, etc.

### <First Embodiment>

### [Configuration of image forming apparatus]

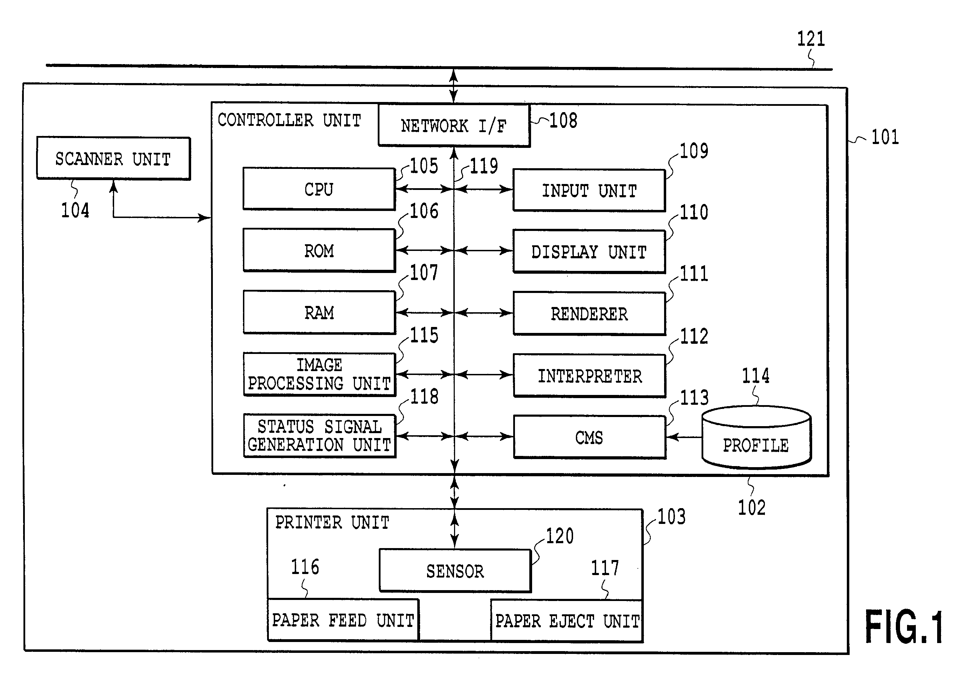

FIG. 1 is a diagram showing an internal configuration of an image forming apparatus having a calibration function according to a first embodiment.

An image forming apparatus 101 includes a controller unit 102, a printer unit 103, and a scanner unit 104.

The controller unit 102 includes various kinds of modules, such as a CPU 105, and each module is connected to another via a data bus 19. A RAM 107 loads program data stored in a ROM 106 and temporarily stores the program data. Then, the CPU 105 gives a command to each module in accordance with the program loaded onto the RAM 107 and causes the image forming apparatus 101 to operate. Data generated at the time of the execution of a command by each module is also stored temporarily in the RAM 107.

A network I/F 108 is an interface module with a network 121. For example, the network I/F 108 communicates with another device via the network 121 based on a communication protocol, such as Ethernet (registered trademark), and performs data communication, such as reception of print data.

An interpreter 112 interprets a PDL (Page Description Language) portion of the received print data and generates intermediate language data.

A CMS (Color Management System) 113 performs color conversion processing on the intermediate language data generated in the interpreter 112 by using a profile 114 stored in the ROM 106. The profile 114 includes a source profile and a destination profile, not shown. By performing the color conversion processing, the color space of an input device is converted into the color space of an output device (image forming apparatus 101) .

A renderer 111 generates raster image data from the intermediate language data having been subjected to the color conversion processing (hereinafter, post CMS intermediate language data).

An image processing unit 115 performs predetermined image processing on the raster image data generated in the renderer 111.

A display unit 110 includes a liquid crystal display etc. for displaying various kinds of information, such as instructions to a user and the state of the image forming apparatus 101. The display unit 110 may have a touch screen function. In such a case, it is also possible to handle user's instructions given via a touch screen as an input of an input unit 109.

The input unit 109 is an interface for receiving an input from a user.

A status signal generation unit 118 generates a status signal indicating the state of the image forming apparatus 101. For example, the status signal generation unit 118 generates a Ready signal indicating that a print job by the PDL data, a copy job for copying a document read by the scanner unit 104, etc., can be received. Further, the status signal generation unit 118 generates a Busy signal indicating that various kinds of jobs cannot be received and a calibration status signal indicating that a calibration operation is being performed.

The printer unit 103 performs printing processing to form image data on a printing medium, such as paper, by using colored toner, such as C, M, Y, and K, and has a paper feed unit 116 configured to feed paper and a paper eject unit 117 configured to eject printed paper etc. Further, on an intermediate transfer belt (not shown) of the printer unit 103, a sensor 120 capable of measuring the density of at least a developed image is provided and the measured density (numerical value information) is sent to the controller unit 102.

The scanner unit 104 irradiates a bundle of documents or one document set on a document table or an ADF (not shown) by a light source, and forms a reflected image by a lens on a solid-state image capturing element, such as a CCD sensor, and obtains a signal of a read image in the form of a raster as image data from the solid-state image capturing element.

Next, details of the processing in the image processing unit 115 are explained.

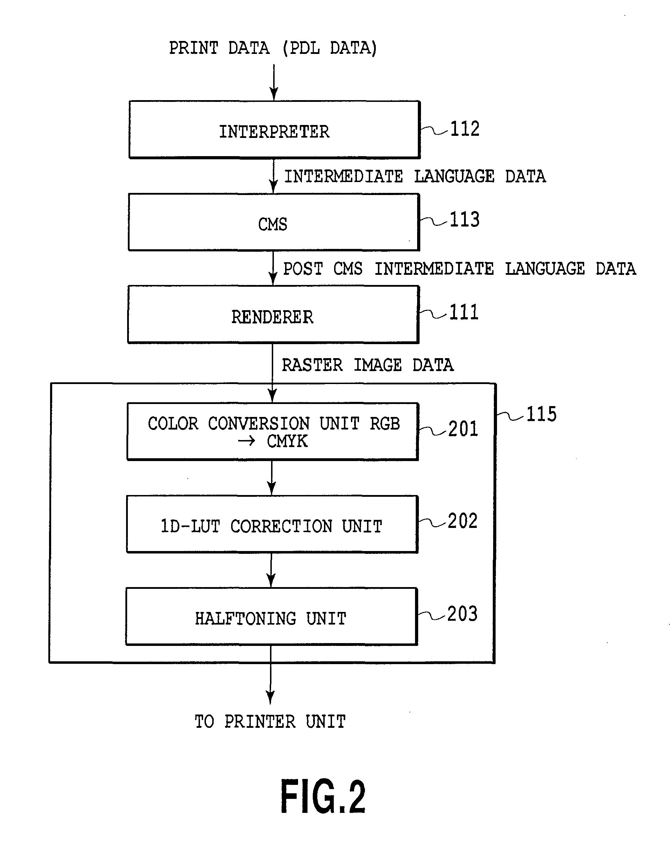

FIG. 2 is a diagram for explaining the processing inside the image processing unit 115. Print data (PDLdata) input to the image forming apparatus 101 turns into raster image data through each piece of the processing in the interpreter 112, the CMS 113, and the renderer 111 and is input to the image processing unit 115.

The image processing unit 115 includes a color conversion unit 201, a 1D-LUT correction unit 202, and a halftoning unit 203.

The color conversion unit 201 is a processing unit configured to perform conversion into the color space of CMYK in the case where the data output from the CMS 113 is data in the device-dependent RGB color space. In the case where the data output from the CMS 113 is the data in the device-dependent CMYK color space, the processing in the color conversion unit 201 is skipped.

The 1D-LUT correction unit 202 corrects the gradation of each single color of C, M, Y, and K of the CMYK data whose color space has been converted in the color conversion unit 201 and converts each into C2, M2, Y2, and K2, respectively. In this case, on a condition that the input signal of the 1D-LUT is 8-bit data, preferably, the number of entries in the LUT is 256. In other words, preferably, one output value is stored for each of all the input values 0 to 255.

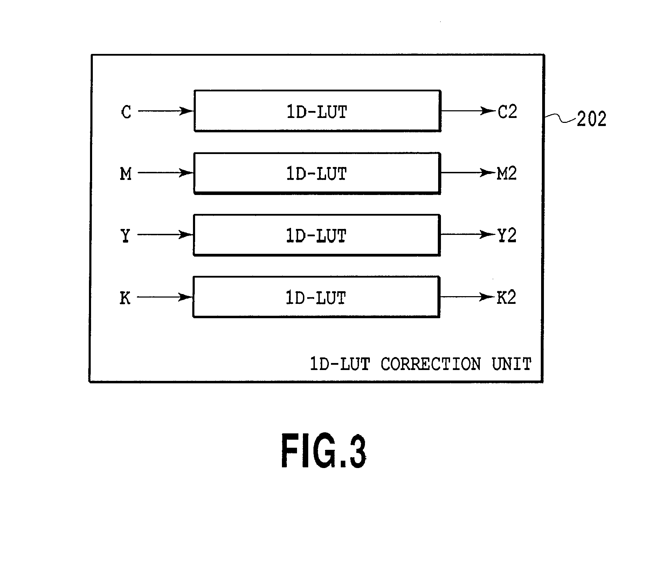

FIG. 3 is a schematic diagram showing the relationship of input/output of the 1D-LUT correction unit 202. In FIG. 3, four 1D-LUTs for C input/C2 output, M input/M2 output, Y input/Y2 output, and K input/K2 output are independent of one another and one output exists for one input.

The halftoning unit 203 performs screen processing by using a dither pattern etc. on the data of C2, M2, Y2, and K2 output from the 1D-LUT correction unit 202. Then, the image data on which the screen processing has been performed is sent to the printer unit 103 and is printed on a sheet.

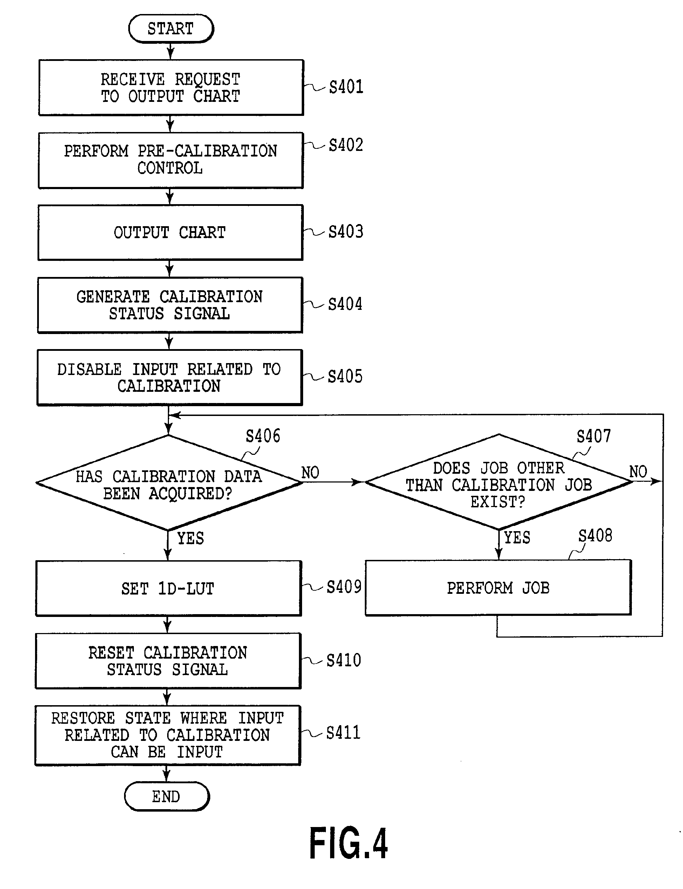

FIG. 4 is a flowchart showing a flow of processing to control operation contention among calibration jobs etc. in the image forming apparatus 101. The series of the processing is performed by the CPU 105 executing computer-executable programs in which the procedures shown below are described after reading the programs from the ROM 106 onto the RAM 107.

Upon receipt of instructions to perform a normal calibration, the controller unit 102 receives a chart output request at step 401.

At step 402, the controller unit 102 gives instructions to perform pre-calibration control to the printer unit 103. Based on the instructions, the printer unit 103 performs the pre-calibration control. Here, the pre-calibration control refers to control processing to bring the state of the inside of the printing mechanism into a target state at the time of outputting a chart. The state of the inside of the printing mechanism refers to, for example, settings of various kinds of potentials in the electrophotographic process to form a toner image on the intermediate transfer belt. The settings of various kinds of potentials are determined so that the measured values reach target values while measuring a toner image formed on the intermediate transfer belt by using the sensor 120.

At step 403, the controller unit 102 gives instructions to print the chart to the printer unit 103. In response to this, the printer unit 103 prints the pattern for a calibration on a sheet fed from the paper feed unit 116 and thus creates the chart. The created chart is ejected from the paper eject unit 117.

At step 404, the status signal generation unit 118 of the controller unit 102 generates a calibration status signal indicating that the image forming apparatus 101 is performing the calibration operation.

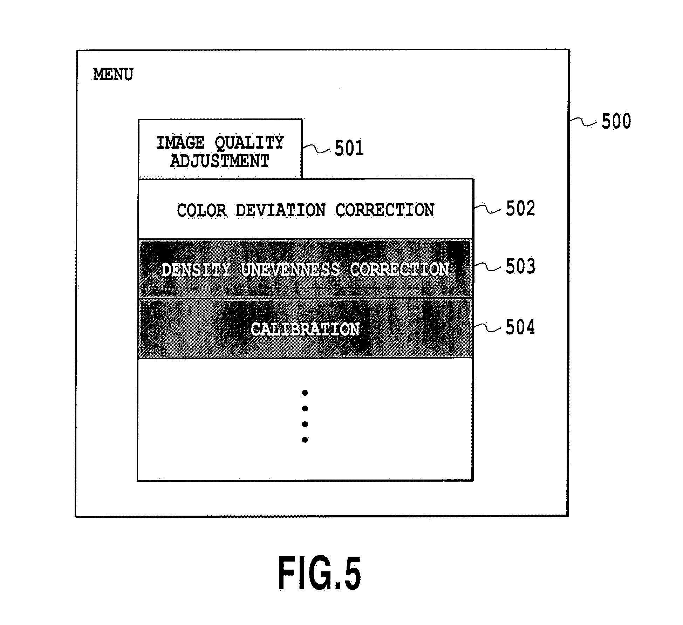

At step 405, the controller unit 102 disables the input of requests related to a calibration. Specifically, for example, on the menu screen as a user interface screen displayed on the display unit 110, the items related to a calibration are grayed out or the items related to a calibration are not displayed. FIG. 5 is a diagram showing an example of a menu screen on which the input of requests related to a calibration is disabled. A menu screen 500 is in the state where among the items of the various kinds of operation requests of the image forming apparatus 101, an item 501 related to image quality adjustment is displayed, and "Density unevenness correction" 503 and "Calibration" 504 are displayed in the grayed-out state, and therefore, a user cannot select the items. In addition to "Calibration" 504, "Density unevenness correction" 503 is also displayed in the grayed-out state because density unevenness correction to adjust density unevenness for each position of a sheet is closely related to density correction. In contrast to this, "Color deviation correction" 502 to adjust the print positions between each color of CMYK is not related to density correction, and therefore, it is not displayed in the grayed-out state and is left in the selectable state. As described above, control is performed so that requests related to a calibration cannot be input. It may also be possible to notify a user of this fact by displaying a message of, for example, "Because a calibration is being performed at present, requests related to another calibration cannot be input" on the display unit 110 etc. together with (or in place of) the control such as this.

At step 406, the controller unit 102 determines whether or not the calibration data that is obtained by measuring the chart has been acquired. In the case where the acquisition of the calibration data is recognized, the processing proceeds to step 409. On the other hand, in the case where the acquisition of the calibration data cannot be recognized, the processing proceeds to step 407.

At step 407, the controller unit 102 determines whether there exists a job that requests the execution of an operation other than a calibration, such as a copy job and a print job. In the case where a job, such as copy and print, exists, the processing proceeds to step 408. On the other hand, in the case where there exists no job, such as copy and print, the processing returns to step 406.

At step 408, the controller unit 102 performs a job, such as copy and print. After performing the job, the processing returns to step 406.

At step 409, the controller unit 102 generates a 1D-LUT based on the acquired calibration data and sets the 1D-LUT in the 1D-LUT correction unit 202.

At step 410, the status signal generation unit 118 of the controller unit 102 resets the calibration status signal. At this time, it may also be possible to generate the Ready signal indicating that various kinds of jobs can be received.

At step 411, the controller unit 102 restores the state where requests related to a calibration can be input. In the case of the present embodiment, the display of the items related to a calibration, which are displayed in the grayed-out state etc. , in the menu screen 500 displayed on the display unit 110 is returned to the original display. Due to this, it is made possible again for a user to input a request related to a calibration.

As above, according to the present embodiment, in the case where the execution of a calibration based on instructions of a user is started in the image forming apparatus, the input of requests related to a calibration is disabled. Consequently, another normal calibration job no longer occurs during the execution of a calibration and at the same time, a user can grasp the fact, and therefore, the usability is improved.

### <Second Embodiment>

In the first embodiment, the aspect is explained in which in the case where the execution of a normal calibration is stared in the image forming apparatus 101, the input of requests related to a calibration is disabled. Next, an aspect is explained as a second embodiment, in which in the case where the execution of a normal calibration is started, the previously-described automatic calibration is temporarily invalidated so that the automatic calibration is not performed. Explanation of the portions in common to those of the first embodiment is omitted or simplified and here, different points are explained mainly.

As described previously, among calibrations, there exists a calibration of type for which an execution request is automatically made in the image forming apparatus. Such an automatic calibration is designed so that an execution request (job) thereof is made at the time of the recognition of the fulfillment of the conditions as follows:
- In the case where environmental circumstances, such as temperature and humidity inside and outside the image forming apparatus are measured by a sensor, not shown, and it is determined that a change that will affect the print density characteristics has occurred.
- In the case where printing is performed so that printed sheets reaches or exceeds a predetermined number of sheets.
- In the case where a predetermined time has elapsed after the previous calibration.

Then, in the case of this automatic calibration, the calibration is performed by forming a patch image for measuring the gradation characteristics on the photosensitive drum or on the intermediate transfer belt and by reading the patch image by the sensor 120 for measurement. Consequently, it is not necessary to read the chart by the scanner 104 etc. and the interposition of a user's task, such as setting of the printed chart on the document table etc., is no longer necessary.

In the present embodiment, in the case where a normal calibration that is performed in accordance with instructions from a user is being performed in the image forming apparatus 101, control is performed so as to prevent the above-described automatic calibration from being performed.

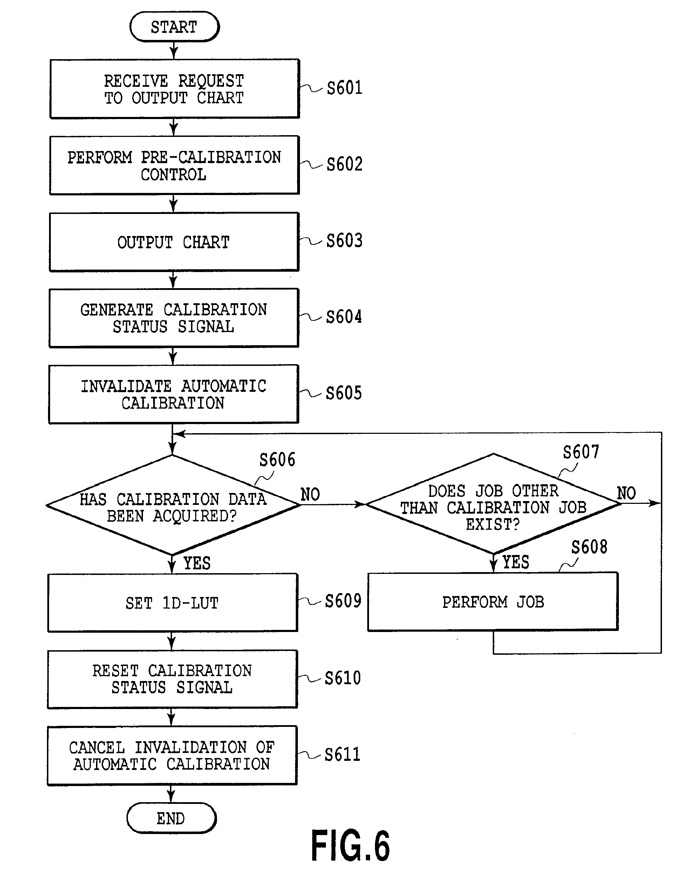

FIG. 6 is a flowchart showing a flow of processing to control operation contention among calibration jobs etc. in the image forming apparatus 101.

Step 601 to step 604 are the same as step 401 to step 404 in the flowchart in FIG. 4 according to the first embodiment.

In the case where the calibration status signal indicating that a calibration is being performed is generated at step 604, the controller unit 102 invalidates the above-described automatic calibration at step 605. Specifically, for example, by changing a flag (e.g., set to "1" in the case of invalidation and set to "0" in the case of validation, etc.) for controlling an automatic calibration, a request to perform the automatic calibration is prevented from being made even in the case where the fulfillment of the conditions is detected. Further, as an aspect of the invalidation, it may also be possible to, for example, perform initialization processing to reset an index for detecting the fulfillment of the predetermined conditions to the initial value (temporary invalidation), such as resetting a counter that counts the number of printed sheets.

Step 606 to step 610 correspond to step 406 to step 410 in the flowchart in FIG. 4 according to the first embodiment.

In the case where the calibration status signal is reset at step 610, the controller unit 102 validates the automatic calibration at step 611. Specifically, for example, by changing the above-described flag, the state is returned to the state where a request to perform the automatic calibration is made in the case where the fulfillment of the conditions is detected and thus invalidation is cancelled.

In the above-described example, the automatic calibration is invalidated instead of disabling the input of requests related to a calibration as in the first embodiment, but a configuration may be accepted, in which control to invalidate an automatic calibration is performed additionally, with the configuration of the first embodiment being made use of as it is.

As above, according to the present embodiment, control is performed so that a request to perform an automatic calibration is prevented from being made while a normal calibration is being performed in the image forming apparatus 101. Due to this, even in the case where the conditions to start an automatic calibration are fulfilled, a request to perform an automatic calibration is not made, and therefore, the operation contention among calibration jobs is suppressed.

### <Third Embodiment>

A calibration is for timely correcting variations in density due to variations in the environment of the image forming apparatus, and therefore, it is desirable to complete the processing from the start of a calibration until a 1D-LUT is set within an appropriate period of time. However, conceivably, there are circumstances in which, for example, even though the chart has been output, it is not possible to immediately measure the chart. In this case, the calibration is left uncompleted and as a result of that, there is a possibility that the execution of a calibration by another user will be restricted.

Next, an aspect that solves the above-described problem is explained as a third embodiment. Explanation of the portions in common to those of the first and second embodiments is omitted or simplified and here, different points are explained mainly.

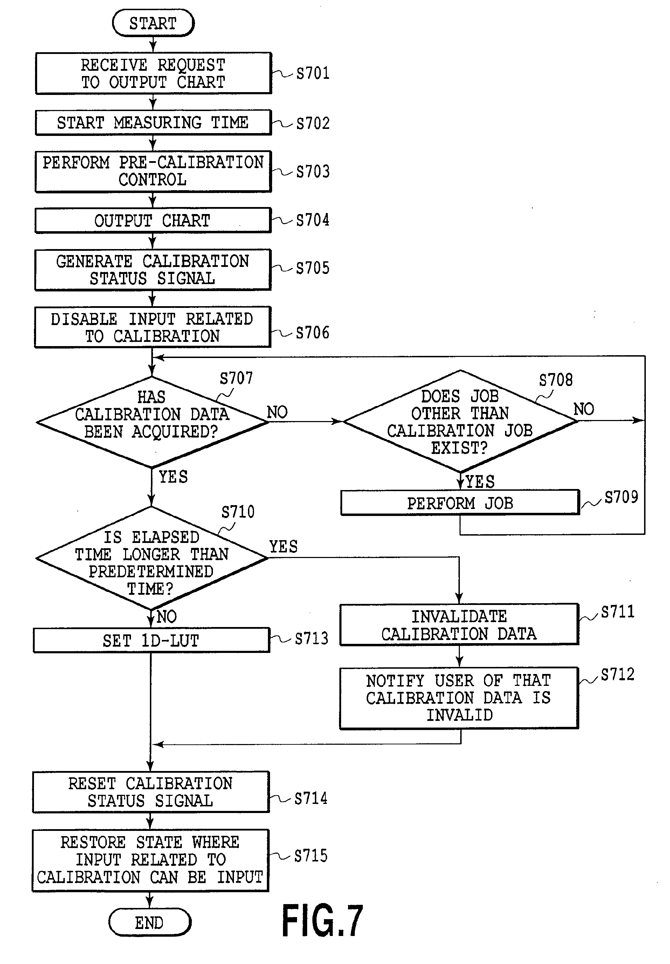

FIG. 7 is a flowchart showing a flow of processing to control operation contention among calibration jobs etc. in the image forming apparatus 101.

Upon receipt of a request to perform a calibration, the controller unit 102 receives a request to output a chart from the input unit 109 etc. at step 701.

At step 702, the controller unit 102 starts measuring the time elapsed after the request to output a chart is received.

Step 703 to step 707 correspond to step 402 to step 406 in the flowchart in FIG. 4 according to the first embodiment.

At step 707, the controller unit 102 determines whether or not calibration data that is obtained by measuring a chart by the scanner unit 104 etc. has been acquired. In the case where the acquisition of the calibration data is recognized, the processing proceeds to step 710. On the other hand, in the case where the acquisition of the calibration data cannot be recognized, the processing proceeds to step 708.

At step 708, the controller unit 102 determines whether there exists a job other than the calibration job, such as a copy job and a print job. In the case where a copy job or a print job exists, the job is performed as in the first embodiment (step 709). On the other hand, in the case where a copy job or a print job does not exist, the processing returns to step 707.

At step 710, the controller unit 102 determines whether the time elapsed after the start of the execution of the calibration (start of the measurement at step 702) exceeds a predetermined time set in advance (e.g., 30 min). In the case where the elapsed time exceeds the predetermined time, the processing proceeds to step 711. On the other hand, in the case where the elapsed time does not exceed the predetermined time, the processing proceeds to step 713.

At step 711, the controller unit 102 invalidates the acquired calibration data. In other words, the calibration based on the acquired calibration data is not performed and is cancelled.

At step 712, the controller unit 102 notifies a user of that the calibration data is invalid. For example, a message of "Input calibration data is invalid. Perform a calibration again from the beginning." is displayed on the display unit 110. After the notification, the processing proceeds to step 714.

At step 713, the controller unit 102 generates a 1D-LUT based on the acquired calibration data and sets the 1D-LUT in the 1D-LUT correction unit 202.

At step 714, the status signal generation unit 118 of the controller unit 102 resets the calibration status signal.

At step 715, the controller unit 102 restores the state where a request related to a calibration can be input.

As above, according to the present embodiment, in the case where a fixed time elapses with the previous calibration being left uncompleted, the calibration is cancelled and a state where another calibration can be performed is brought about. Due to this, it is possible to suppress the occurrence of operation contention among calibration jobs while keeping the chance to perform a necessary calibration.

### <Fourth Embodiment>

Next, an aspect to control operation contention among calibration jobs etc. in the case where a request to perform a remote calibration is made from an information processing apparatus, such as a PC, connected via a network is explained as a fourth embodiment. Explanation of the portions in common to those of the first to third embodiments is omitted or simplified and here, different points are explained mainly.

In the previously-described calibration (remote calibration) based on instructions from a PC etc. via a network, for example, a series of operations as follows is performed.
- Printing of a chart by the image forming apparatus in response to a request from a PC
- Reading of the printed chart by a densitometer etc. independent of the image forming apparatus
- Transmitting the result of the reading (or LUT) to the image forming apparatus and performing the calibration

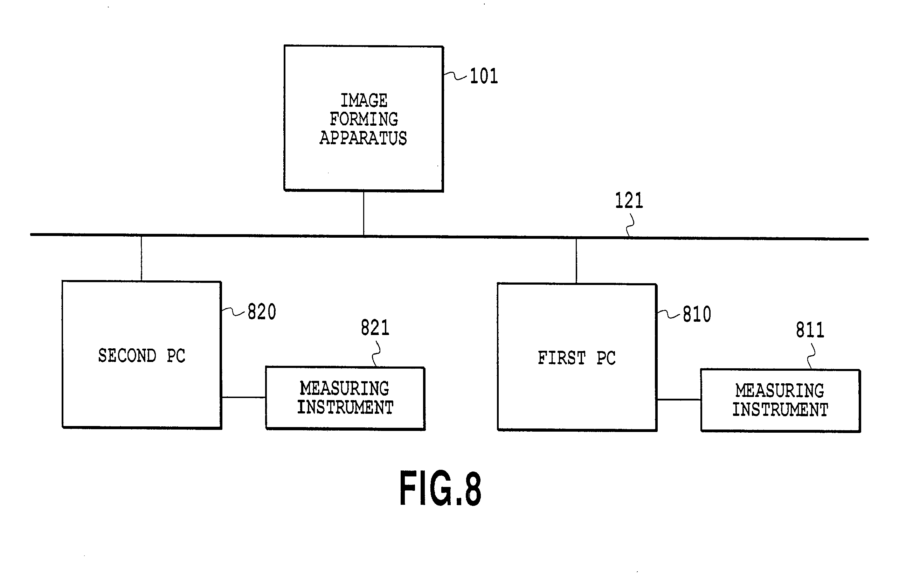

FIG. 8 is a diagram showing an example of a configuration of a network print system according to the present embodiment. To the network 121, the image forming apparatus 101, a first PC 810, and a second PC 820 are connected, and to the PCs 810 and 820, measuring instruments 811 and 821 for measuring a chart are connected, respectively, via, for example, the USB etc. The measuring instruments 811 and 821 may be the same reading device as the scanner unit 104 of the image forming apparatus 101, or may be a spectrophotometer or a densitometer. Each can acquire a density value directly or by calculating a measured value. Further, the measuring instruments 811 and 821 do not necessarily need to be connected locally to each PC and may be connected indirectly via the network 121 or other lines.

On the PCs 810 and 820, a calibration application having functions described below is running.
- A function to transmit a request to output a chart that is used in a calibration to the image forming apparatus 101 via the network 121
- A function to control the measuring instruments 811 and 821 to acquire the results of measuring a chart
- A function to transmit calibration data based on the results of measuring a chart to the image forming apparatus 101

The calibration data based on the measurement results may be the density value itself obtained by the measurement or the density value converted into a format necessary for the generation of a 1D-LUT. Further, the calibration data may be a 1D-LUT generated by the calibration application.

The PCs 810 and 820 include a CPU for executing programs stored in a ROM or in an external memory and comprehensively control each unit below.
- An external memory for storing the OS, which is a control program, and programs, such as software that runs on the OS
- A RAM that functions as a main memory, a work area, etc., of the CPU
- A USB I/F that controls communication with a USB device. For example, an input device, such as a keyboard and a pointing device, an external memory, the measuring instruments 811 and 821 etc. are connected with the PCs 810 and 820 via the USB I/F.
- A video card (VC) that controls a display on the display
- A network I/F, which is an interface module with the network 121

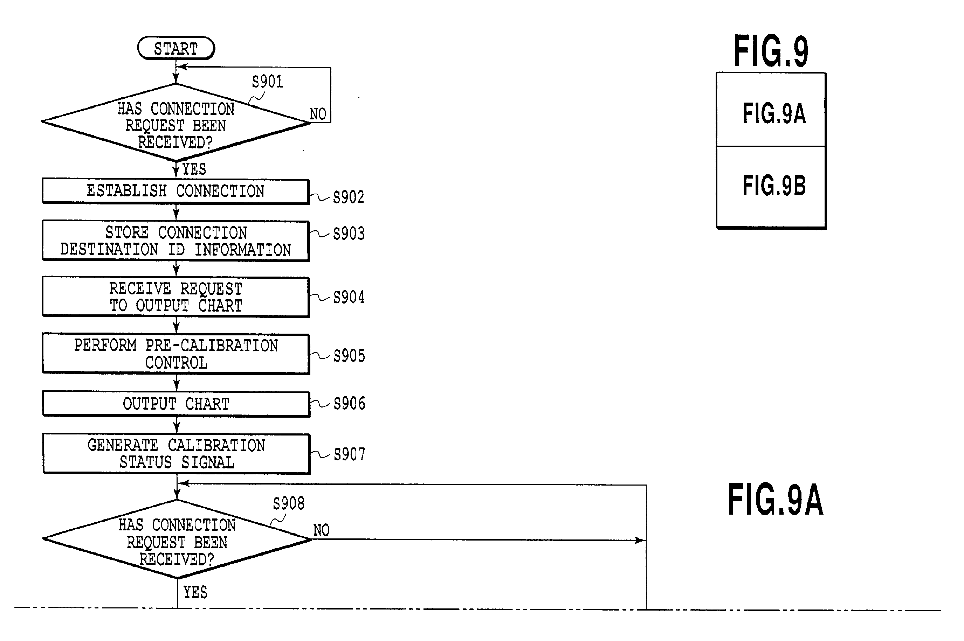

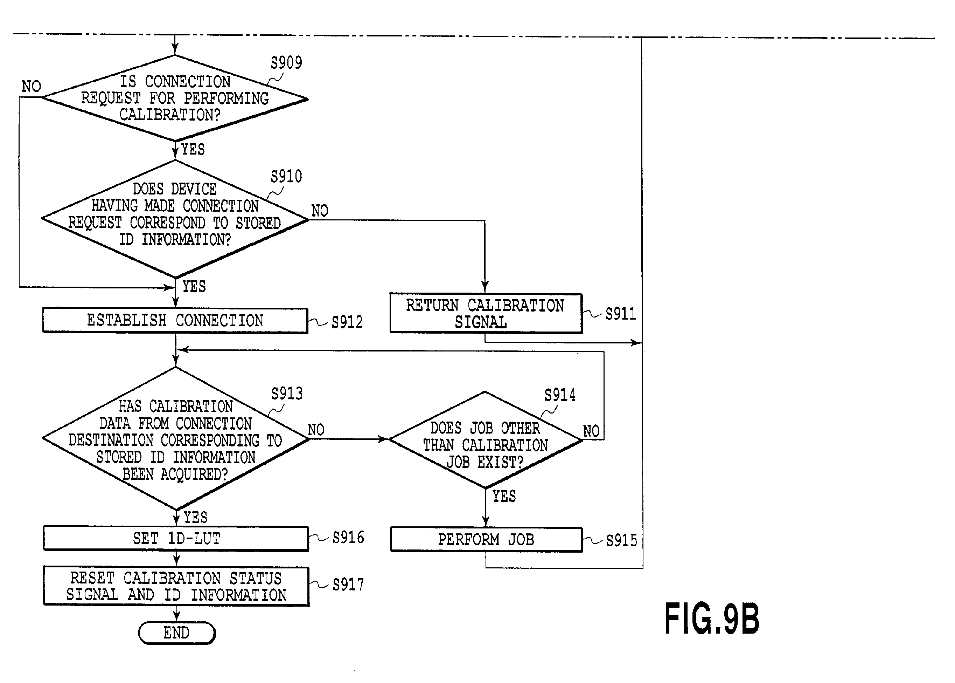

FIGs. 9A and 9B are flowcharts showing a flow of processing to control operation contention among calibration jobs etc. in the image forming apparatus 101 according to the present embodiment. Here, a case is explained as an example, where the execution of a remote calibration is started based on instructions from the first PC 810 and before the completion of the remote calibration, a copy job is input from the second PC 820.

At step 901, the controller unit 102 monitors the reception of a connection request from the calibration application that is running on the PC 810. In the case where the reception of a connection request from the calibration application is recognized, the processing proceeds to step 902.

At step 902, the controller unit 102 establishes a connection with the PC 810 through predetermined protocol communication.

At step 903, the controller unit 102 stores ID information, which has been acquired in the above-described predetermined protocol communication, for specifying the PC 810 and the calibration application thereof in the RAM 107. Here, the ID information may be any information, for example, such as an IP address allocated uniquely to each PC and a unique license code at the time of installing the calibration application, by which it is possible to uniquely identify the device and application.

At step 904, the controller unit 102 receives a request to output a chart from the PC 810 with which a connection has been established. After the request to output a chart is received, the connection with the PC 810 is broken. Subsequent step 905 to step 907 correspond to step 402 to step 404 in the flowchart in FIG. 4 according to the first embodiment.

After a calibration status signal is generated at step 907, the controller unit 102 waits for the reception of a connection request from the PC at step 908. Upon receipt of a connection request, the processing proceeds to step 909.

At step 909, the controller unit 102 determines whether the received connection request is a connection request for performing a calibration or a connection request for another job, such as a copy job and a print job. For example, in the case where it is recognized that unique protocol communication indicating a request to perform a calibration is included in predetermined protocol communication, it is determined that the connection request is one for performing a calibration as a result. In the case where it is determined that the connection request is one for performing a calibration, the processing proceeds to step 910. On the other hand, in the case where it is determined that the connection request is not one for performing a calibration but a connection request for another job, the processing proceeds to step 912. As described previously, in the case where there is a connection request for a copy job from the second PC 820 before the connection request for performing a calibration from the first PC 810, the processing proceeds to step 912 as a result.

At step 910, the controller unit 102 determines whether the PC that has made the connection request is the PC corresponding to the ID information stored at step 903. Specifically, the ID information of the PC that has made the connection request is checked and whether or not the ID information agrees with the ID information stored in the RAM 107 is determined. In the case where the ID information agrees with the ID information stored in the RAM 107 as the result of the comparison, the processing proceeds to step 912. On the other hand, in the case where the ID information does not agree with the ID information stored in the RAM 107, the processing proceeds to step 911.

At step 911, the controller unit 102 returns a calibration status signal to the PC that has made the connection request and the processing returns to step 908. In the case where the second PC 820 has made a connection request for performing a calibration instead of performing a copy job, a status signal is returned in this stage.

At step 912, the controller unit 102 establishes a connection through predetermined protocol communication as well as returning a signal to permit a connection to the PC that has made the connection request. Here, a connection with the second PC 820 that has made the connection request for a copy job is established.

At step 913, the controller unit 102 determines whether or not calibration data from the device corresponding to the ID information stored at step 903 has been acquired. In the case where the acquisition of the calibration data from the device corresponding to the stored ID information is recognized, the processing proceeds to step 916. On the other hand, in the case where the acquisition of the calibration data cannot be recognized, the processing proceeds to step 914. In the stage where the connection with the second PC 820 has been established, the processing proceeds to step 914 as a result.

At step 914, the controller unit 102 determines whether there exists a job that requests the execution of an operation other than a calibration, such as a copy job and a print job. In the case where there exists a job, such as copy or print, the job is performed (step 915). Here, the copy job from the second PC 820 is performed as a result. After the job is performed, the connection with the PC 820 is broken and the processing returns to step 908. After that, in the case where the connection request for performing a calibration is made again from the first PC 810, a connection with the first PC 810 is established through steps 909 and 910 (step 912). Then, in the case where the acquisition of the calibration data from the PC 810 corresponding to the stored ID information is recognized (YES at step 913), a 1D-LUT is generated based on the calibration data and the 1D-LUT is set in the 1D-LUT correction unit (step 916).

At step 917, the controller unit 102 deletes the ID information stored at step 903 as well as resetting the calibration status signal.

The above is the flow of the processing to control the operation contention among calibrations in the present embodiment.

Next, a processing flow in accordance with the calibration application in the PCs 810/820 according to the present embodiment is explained.

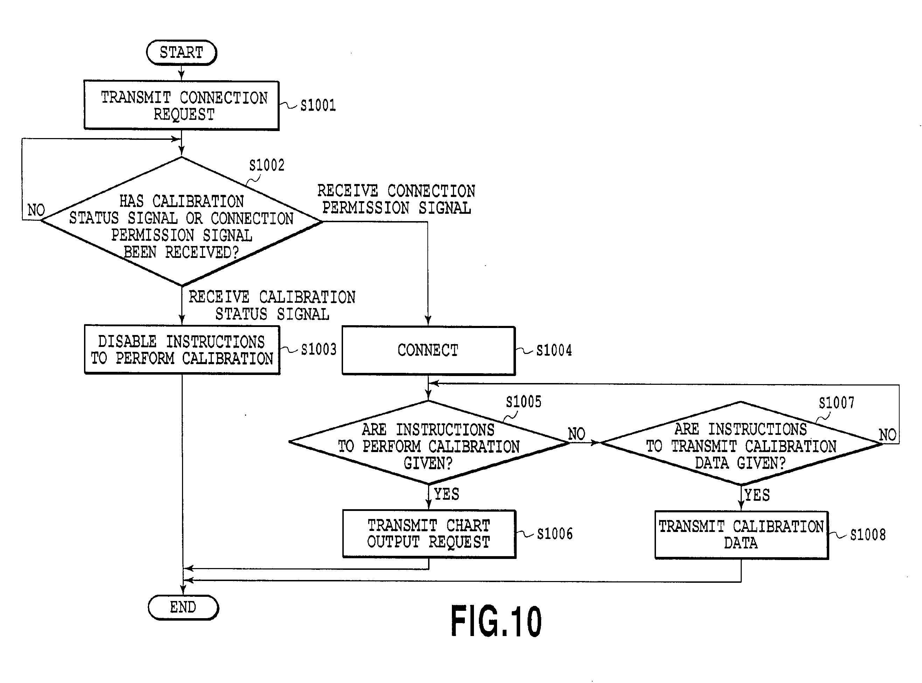

FIG. 10 is a flowchart showing a flow of the processing of the calibration application. The series of the processing is performed by the CPU executing computer executable programs in which the procedures shown below are described after reading the programs from the ROM onto the RAM.

At step 1001, in the case where the CPU recognizes the selection of the image forming apparatus 101 for which a calibration is to be performed based on user's instructions via the input device, the CPU transmits a connection request to the image forming apparatus 101.

At step 1002, the CPU monitors the reception of either a calibration status signal or a connection permission signal from the image forming apparatus 101. Then, in the case where the reception of a calibration status signal is recognized, the processing proceeds to step 1003 and in the case where the reception of a connection permission signal is recognized, the processing proceeds to step 1004.

At step 1003, the CPU disables the selection of the items related to a calibration by graying out etc. the items on the UI screen (not shown) of the calibration application as in FIG. 5 described previously. It may also be possible to make a notification to the user by, for example, displaying a message of "A calibration is being performed now, and therefore, instructions to perform another calibration cannot be given" together with (or in place of) the control such as this.

At step 1004, the CPU establishes a connection with the image forming apparatus 101 through predetermined protocol communication.

At step 1005, the CPU monitors whether user's instructions to perform a calibration have been input on the UI screen (not shown). In the case where the instructions to perform a calibration are recognized, the processing proceeds to step 1006. On the other hand, in the case where the instructions to perform a calibration cannot be recognized, the processing proceeds to step 1007.

At step 1006, the CPU transmits a request to print a chart to the image forming apparatus 101.

At step 1007, the CPU monitors whether user's instructions to transmit calibration data have been input on the UI screen (not shown). In the case where the instructions to transmit calibration data are recognized, the processing proceeds to step 1008. On the other hand, in the case where the instructions to transmit calibration data cannot be recognized, the processing returns to step 1005.

At step 1008, the CPU transmits calibration data based on the results of measuring the chart to the image forming apparatus 101.

Due to this, it is made no longer possible to give instructions to further perform a remote calibration or to transmit calibration data by the calibration application of the information processing apparatus while a calibration is being performed in the image forming apparatus.

As above, in the present embodiment also, it is possible for a user to grasp the fact that instructions to perform a calibration are restricted from being given because of the operation contention, and therefore, it is not necessary to check for a failure etc. of the image forming apparatus, leading to the improvement in usability.

### <Fifth Embodiment>

Next, another control aspect of the operation contention in the fourth embodiment is explained as a fifth embodiment. Explanation of the portions in common to those of the first to fourth embodiments is omitted or simplified and here, different points are explained mainly.

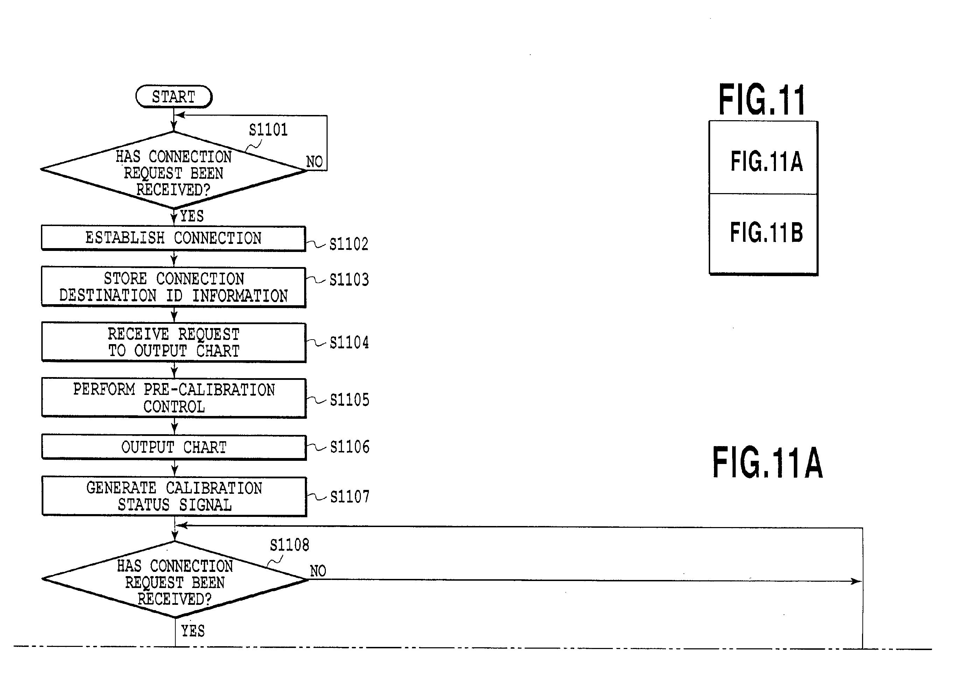

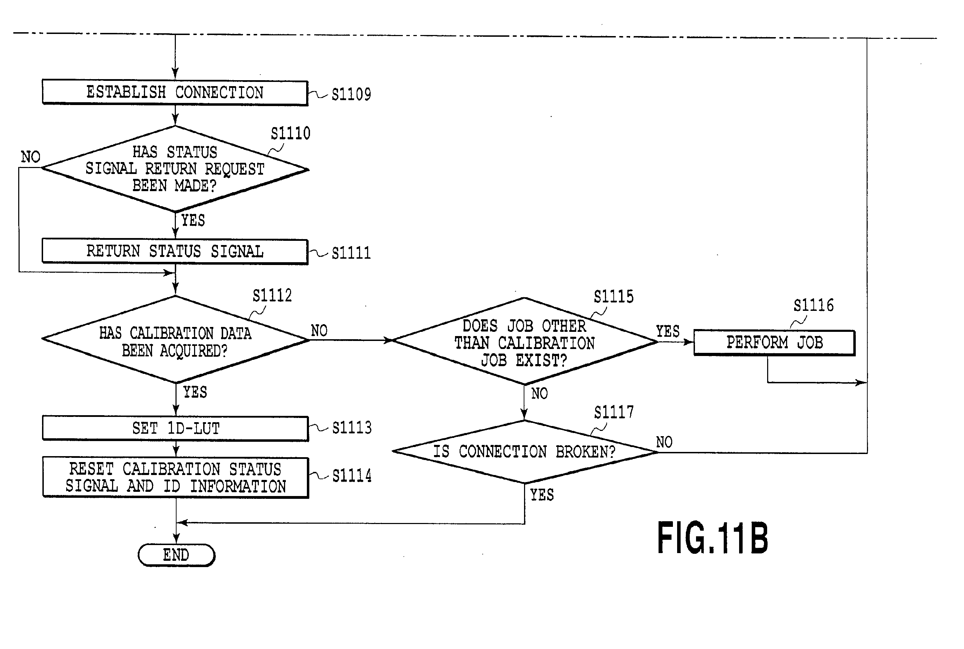

FIG. 11A and 11B are flowcharts showing a flow of processing to control operation contention among calibration jobs etc. in the image forming apparatus 101 according to the present embodiment. Here, a case is explained as an example, where the execution of a remote calibration is started based on instructions from the first PC 810 and before the completion of the remote calibration, a copy job is input from the second PC 820.

At step 1101, the controller unit 102 monitors the reception of a connection request from the calibration application that is running on the PC 810. In the case where the reception of a connection request from the calibration application is recognized, the processing proceeds to step 1102.

At step 1102, the controller unit 102 establishes a connection with the PC 810 through predetermined protocol communication.

At step 1103, the controller unit 102 stores ID information, which has been acquired in the above-described predetermined protocol communication, for specifying the PC 810 and the calibration application thereof in the RAM 107. Here, the ID information may be any information, for example, such as an IP address allocated uniquely to each PC and a unique license code at the time of installing the calibration application, by which it is possible to uniquely identify the device and application.

At step 1104, the controller unit 102 receives a request to output a chart from the PC 810 with which a connection has been established. After the request to output a chart is received, the connection with the PC 810 is broken. Subsequent step 1105 to step 1107 correspond to step 402 to step 404 in the flowchart in FIG. 4 according to the first embodiment. At step 1107, the status signal of the calibration may include the ID information and timestamp information at the time of the generation of the status signal. Further, the status signal may also include information about whether or not a calibration is being performed.

After a calibration status signal is generated at step 1107, the controller unit 102 waits for the reception of a connection request from the PC at step 1108. Upon receipt of a connection request, the processing proceeds to step 1009.

At step 1109, the controller unit 102 establishes a connection through predetermined protocol communication.

At step 1110, the controller unit 102 determines whether a request to return the status signal has been made from the PC 810/820. In the case where it is determined that the return request has been made, the controller unit 102 returns the status signal (step 1111) and the processing proceeds to step 1112. On the other hand, in the case where it is determined that no return request has been made, the controller unit 102 does not return the status signal and the processing proceeds to step 1112.

At step 1112, the controller unit 102 determines whether the calibration data has been acquired. In the case where the acquisition of the calibration data is recognized, the processing proceeds to step 1113. On the other hand, in the case where the acquisition of the calibration data cannot be recognized, the processing proceeds to step 1115. In the stage where the connection with the second PC 820 is established, the processing proceeds to step 1115 as a result.

At step 1115, the controller unit 102 determines whether there exists a job that requests the execution of an operation other than a calibration, such as a copy job and a print job. In the case where there exists a job, such as copy and print, the processing proceeds to step 1116 and the job is performed. Here, the copy job from the second PC 820 is performed as a result. After the job is performed, the connection with the PC 820 is broken and the processing returns to step 1108. After that, in the case where a connection request for performing a calibration is made again from the first PC 810, the connection with the first PC 810 is established (step 1109). Then, in the case where the acquisition of the calibration data by the PC 810 is recognized (PC step 1112), the processing proceeds to step 1113.

At step 113, the controller unit 102 generates a 1D-LUT based on the acquired calibration data and sets the 1D-LUT in the 1D-LUT correction unit 202.

At step 1114, the controller unit 102 deletes the ID information stored at step 1103 as well as resetting the calibration status signal.

The above is the flow of the processing to control the operation contention among calibration jobs etc. in the present embodiment.

Next, a processing flow in accordance with the calibration application in the PCs 810-820 according to the present embodiment is explained.

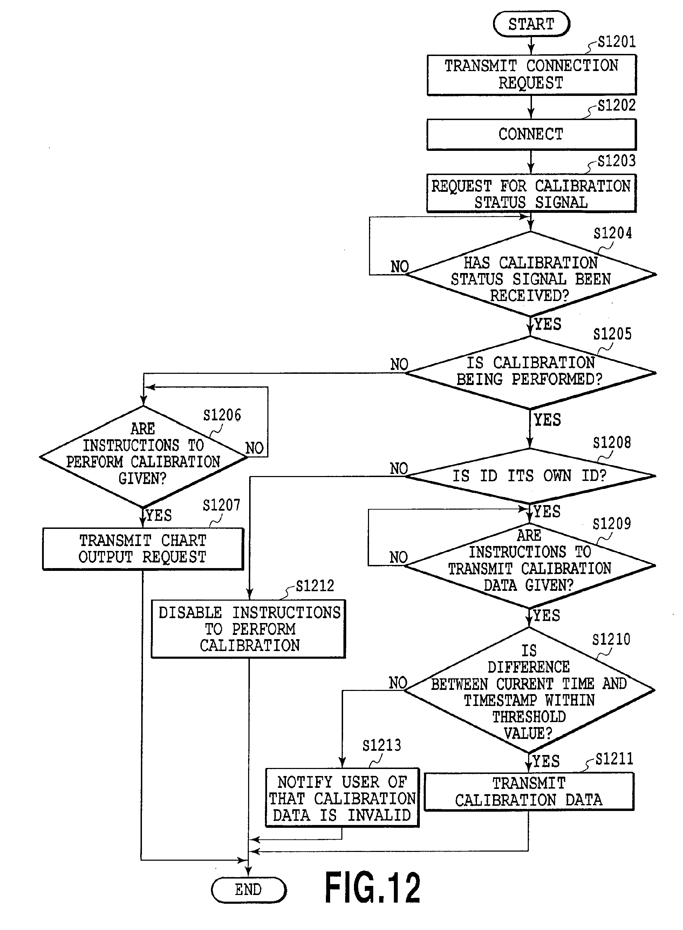

FIG. 12 is a flowchart showing a flow of the processing of the calibration application. The series of the processing is performed by the CPU executing computer executable programs in which the procedures shown below are described after reading the programs from the ROM onto the RAM.

In the case where the CPU recognizes the selection of the image forming apparatus 101 for which a calibration is to be performed by user's instructions via the input device, the CPU transmits a connection request to the image forming apparatus 101 at step 1201, and establishes a connection with the image forming apparatus 101 at step 1202.

At step 1203, the CPU makes a request to transmit the above-described calibration status signal to the image forming apparatus and at step 1204, the CPU monitors the reception of the calibration status signal. In the case where the image forming apparatus 101 is performing a calibration, the calibration status signal exists or information indicative of that a calibration is being performed is included in the calibration status signal. In the case where the image forming apparatus 101 is not performing a calibration, the calibration status signal does not exist or information indicative of that a calibration is not being performed is included in the calibration status signal. In the case where the reception of the calibration status signal is recognized at step 1204, the processing proceeds to step 1205.

At step 1205, whether or not the image forming apparatus 101 is performing a calibration is determined, and in the case where a calibration is being performed, the processing proceeds to step 1208 and in the case where a calibration is not being performed, the processing proceeds to step 1206.

In the case where the image forming apparatus 101 is not performing a calibration, it is possible for the calibration application to give instructions to perform a calibration. Because of this, at step 1206, the presence/absence of instructions to perform a calibration is monitored. In the case where instructions to perform a calibration are recognized, the CPU transmits a request to print a chart to the image forming apparatus 101 at step 1207.

On the other hand, in the case where it is determined that the image forming apparatus 101 is performing a calibration at step 1205, whether or not the ID information in the calibration status signal agrees with the ID of the connected PC is determined at step 1208.

In the case where it is determined that the ID information in the calibration status signal does not agree with the ID of the connected PC at step 1208, the processing proceeds to step 1212. At step 1212, the CPU disables the selection of the items related to a calibration by graying out etc. the items on the UI screen (not shown) as in FIG. 5 described previously. It may also be possible to make a notification to the user by displaying etc. a message of "A calibration is being performed now, and therefore, instructions to perform another calibration cannot be given" together with (or in place of) the control such as this.

On the other hand, in the case where it is determined that the IDs agree with each other at step 1208, the processing proceeds to step 1209. At step 1209, the CPU monitors whether user's instructions to transmit calibration data are input on the UI screen (not shown) is monitored. In the case where the instructions to transmit calibration data are recognized, the processing proceeds to step 1210.

At step 1210, the CPU obtains a difference between the current time and the timestamp in the status signal, and compares the obtained value with a threshold value set in advance. In the case where the obtained value is within the threshold value set in advance, the processing proceeds to step 1211. At step 1211, the CPU transmits the calibration data based on the results of measuring the chart to the image forming apparatus 101.

On the other hand, in the case where the obtained value is greater than the threshold value set in advance, the processing proceeds to step 1213. At step 1213, the CPU notifies the user of that the calibration data is invalid on the UI screen (not shown) of the calibration application. For example, a message of "The input calibration data is invalid. Perform a calibration again from the beginning. " is displayed on the UI screen. Due to this, while the image forming apparatus is performing a calibration, it is made no longer possible to further give instructions to perform a remote calibration or to transmit calibration data by the calibration application of the information processing apparatus.

As above, in the present embodiment also, it is possible for a user to grasp the fact that instructions to perform a calibration are restricted because of the operation contention, and therefore, it is not necessary for a user to check for a failure etc. of the image forming apparatus, leading to the improvement in usability.

### (Other Embodiments)

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)™), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. An image processing apparatus (101) having a calibration, function to correct density characteristics at the time of printing, comprising:
an input unit (110) configured to input user's instructions to perform a calibration;
a signal generation unit (118) configured to generate a signal indicating that a calibration is being performed;
a control unit (102) configured to control the image processing apparatus; and
a display control unit (S405, S411) configured to control a display unit, wherein
the control unit performs control so that instructions to perform a calibration cannot be input through the input unit in a case where the signal indicating that a calibration is being performed is generated, and
the display control unit displays a message to the effect that instructions to perform a calibration cannot be given on the display unit.

2. The image processing apparatus according to claim 1, wherein
the display control unit displays items related to a calibration in a grayed-out state or does not display items related to a calibration on a screen that is displayed on the display unit.

3. The image processing apparatus according to claim 1, wherein
the display unit is possessed by an information processing apparatus that is connected to the image processing apparatus.

4. The image processing apparatus according to claim 1, wherein
the calibration includes an automatic calibration that is performed automatically in a case where predetermined conditions are fulfilled, and
the control unit does not perform the automatic calibration during the period from the generation of the signal indicating that a calibration is being performed until the signal is reset even in a case where the predetermined conditions are fulfilled.

5. The image processing apparatus according to claim 4, wherein
the control unit does not perform the automatic calibration by initializing an index for detecting the fulfillment of the predetermined conditions.

6. The image processing apparatus according to claim 1, further comprising a measuring unit configured to measure an elapsed time after the start of the execution of a calibration, wherein
the control unit resets the signal indicating that a calibration is being performed in a case where the measured elapsed time exceeds a predetermined time.

7. The image processing apparatus according to claim 6, wherein
the control unit invalidates calibration data that is input after the measured elapsed time has exceeded a predetermined time and notifies a user of that the input calibration data is invalid.

8. The image processing apparatus according to claim 1, wherein
while performing a calibration based on instructions input from an information processing apparatus connected to the image processing apparatus, in a case where a request from another information processing apparatus different from the connected information processing apparatus that has made the request to perform the calibration is the execution of a calibration job, the control unit performs control so as not to perform the calibration job and in a case where the request is the execution of a job other than the calibration job, the control unit performs control so as to perform the job other than the calibration job.

9. The image processing apparatus according to claim 1, wherein
in a case where a calibration is performed based on instructions from an information processing apparatus connected to the image processing apparatus, a signal that is generated by the signal generation unit includes information for specifying the information processing apparatus that has made the request to perform the calibration.

10. An information processing apparatus (810, 820) capable of giving instructions to perform a calibration to correct density characteristics at the time of printing to an image processing apparatus that is connected via a network, the information processing apparatus comprising:
a communication unit configured to communicate with the image processing apparatus;
a control unit configured to control the information processing apparatus; and
a display control unit configured to control a display unit, wherein
in a case where the signal indicating that a calibration is being performed is received from the image processing apparatus by the communication unit:
the control unit performs control so that instructions to perform a calibration cannot be given to the image processing apparatus; and
the display control unit displays a message to the effect that instructions to perform a calibration cannot be given on the display unit.

11. The information processing apparatus according to claim 10, wherein
the display control unit displays items related to a calibration in a grayed-out state or does not display items related to a calibration on the display unit.

12. The information processing apparatus according to claim 10, wherein
the display unit is possessed by the image processing apparatus that is connected.

13. The information processing apparatus according to claim 10, comprising a unit configured to, in a case where the signal indicating that a calibration is being performed is received from the image processing apparatus by the communication unit, calculate an elapsed time after the calibration execution request based on time information included in the signal, wherein
in a case where the calculated elapsed time is longer than a threshold value, the control unit performs control so that calibration data cannot be transmitted to the image processing apparatus.

14. A control method of an image processing apparatus having a calibration function to correct density characteristics at the time of printing, the method comprising the steps of:
inputting user's instructions to perform a calibration;
generating a signal indicating that a calibration is being performed;
controlling the image processing apparatus; and
controlling a display unit, wherein
in the step of controlling the image processing apparatus, in a case where the signal indicating that a calibration is being performed is generated, control is performed so that instructions to perform a calibration cannot be input in the inputting step, and
in the step of controlling the display unit, a message to the effect that instructions to perform a calibration cannot be given is displayed on the display unit.

15. A control method of an information processing apparatus capable of giving instructions to perform a calibration to correct density characteristics at the time of printing to an image processing apparatus that is connected via a network, the method comprising the steps of:
communicating with the image processing apparatus;
controlling the information processing apparatus; and
controlling a display unit, wherein
in a case where the signal indicating that a calibration is being performed is received from the image processing apparatus in the step of communicating with the image processing apparatus, control is performed so that instructions to perform a calibration cannot be given to the image processing apparatus in the step of controlling the information processing apparatus, and
in the step of controlling the display unit, a message to the effect that instructions to perform a calibration cannot be given is displayed on the display unit.

16. A non-transitory computer readable storage medium storing a program for causing a computer to perform the method according to claim 14 or 15.
